# EUROPEAN PATENT APPLICATION

(11) **EP 3 702 216 A1**
(43) Date of publication of application: **02.09.2020**
(21) Application number: 18870213.8
(22) Date of filing: 10.10.2018
(51) Int. Cl.: B60Q 3/208, B60Q 3/233, B60Q 3/242, B60Q 3/60, B60Q 3/70, B60Q 3/80, B60Q 3/82, B60Q 3/85, G08G 1/16

(54) **LIGHT EMITTING DEVICE, VEHICLE, LIGHT EMISSION CONTROLLING METHOD, AND PROGRAM**

(30) Priority: 24.10.2017 JP 2017205518
(71) Applicant: Pioneer Corporation, Tokyo 113-0021 (JP)
(72) Inventor: KIKUCHI, Takashi, Tokyo 113-0021 (JP); SUMITA, Jun, Tokyo 113-0021 (JP); MIYASAKA, Mineki, Tokyo 113-0021 (JP)
(74) Representative: Vossius & Partner Patentanwälte Rechtsanwälte mbB
(86) International application number: PCT/JP2018/037715
(87) International publication number: WO 2019/082655

(57) **Abstract**

When a vehicle (10) is made stationary, a control device of the vehicle (10) determines whether there is another vehicle approaching the vehicle (10) or not before opening a door (16) to let a user get out of the vehicle. When another vehicle is approaching, the control device (12) allows at least some of a plurality of light-emitting panels to display a warning (14d, 14e) . In the warning display, the control device (12) determines a light-emitting pattern of the light-emitting panels using the approaching direction of the moving object.

## Description

### TECHNICAL FIELD

The present invention relates to a light-emitting device, a vehicle, a method for controlling light emission, and a program.

### BACKGROUND ART

Various light-emitting devices such as a lamp, a display device, or the like are installed on a vehicle such as an automobile or the like. Some of these light-emitting devices are used for safety. For example, Patent Document 1 describes displaying, when a moving vehicle is detected approaching a vehicle at the time of getting out of the vehicle, a rear image including the moving vehicle, by a display device in the interior of the vehicle.

### RELATED ART DOCUMENT

### PATENT DOCUMENT

[Patent Document 1]: Japanese Unexamined Patent Application Publication No. 2009-78674

### SUMMARY OF THE INVENTION

Studies on autonomous driving of vehicles are currently being undertaken. As autonomous driving of a vehicle prevails, an occupant becomes less concerned of the road or the like being traveled by the vehicle. Therefore, when the occupant is simply notified of another vehicle approaching the vehicle ridden by the occupant (own vehicle), it is difficult for the occupant to recognize from which direction the approaching vehicle is approaching the own vehicle.

An example of the problem to be solved by the present invention is to allow, when a vehicle is being approached by another vehicle, an occupant in a stopped vehicle to be notified of the approaching direction of the other vehicle.

### MEANS FOR SOLVING THE PROBLEM

The invention described in claim 1 is a light-emitting device including:
a plurality of light-emitting units installed on a vehicle and emitting light toward an interior of the vehicle; and
a control unit controlling the plurality of light-emitting units independently from each other,
in which in a case where a moving object is approaching the vehicle, the control unit determines a light-emitting pattern of the plurality of light-emitting units using an approaching direction of the moving object.

The invention described in claim 6 is a vehicle provided with the light-emitting device according to any one of claims 1 to 5.

The invention described in claim 7 is a method for controlling light emission, including:
providing a vehicle with a plurality of light-emitting units emitting light toward an interior of the vehicle, and
determining, by a computer, when a moving object is approaching the vehicle, a light-emitting pattern of the plurality of light-emitting units using an approaching direction of the moving object.

The invention described in claim 8 is a program for causing a computer to function as a device that controls light emission of a plurality of light-emitting units,
the plurality of light-emitting units being installed on a vehicle and emitting light toward an interior of the vehicle, and
the program causing the computer to function to determine, when a moving object is approaching the vehicle, a light-emitting pattern of the plurality of light-emitting units using an approaching direction of the moving object.

### BRIEF DESCRIPTION OF THE DRAWINGS

The objects described above, and other objects, features and advantages are further made apparent by suitable embodiments that will be described below and the following accompanying drawings.
FIG. 1 is a diagram showing a configuration of a system according to an embodiment.
FIG. 2 is a diagram exemplifying a hardware configuration of a control device.
FIG. 3 is a cross-sectional view of a window.
FIG. 4 is a cross-sectional view of a configuration of a light-emitting panel.
FIG. 5 is a plan view of a light-emitting panel.
FIG. 6 is a diagram showing a state in which a vehicle and a terminal emit light interlockingly with each other.
FIG. 7 shows examples of flowcharts in a case where a vehicle and a terminal perform light emission operation shown in FIG. 6.
FIG. 8 is a diagram showing an example of light emission performed by a vehicle.
FIG. 9 shows an example of a flowchart when a control device performs light emission control shown in FIG. 8.
FIG. 10 is a diagram showing an example of a pattern of light emission shown in S140 of FIG. 9.
FIG. 11 is a diagram showing a state of the interior of a vehicle.
FIG. 12 is a diagram showing a configuration of a seat.
FIG. 13 is a cross-sectional view to explain an orientation of a light-emitting panel.
FIG. 14 shows a first example of flowcharts at the time when a control device reads route specifying information from a terminal.
FIG. 15 shows a second example of flowcharts at the time when a control device reads route specifying information from a terminal.
FIG. 16 shows an example of a flowchart at the time when a control device starts light emission of a light-emitting panel on a window.
FIG. 17 shows an example of a light emission pattern of a light-emitting panel when a sight line guidance is performed.
FIG. 18 is a flowchart showing an example of control performed by a control device when a sight line guidance is performed.
FIG. 19 is a diagram showing an example of a warning display by a light-emitting panel.
FIG. 20 is an example of a flowchart when the control device allows the light-emitting panels to display a warning.

### DESCRIPTION OF EMBODIMENT

Embodiments of the present invention will be described below by referring to the drawings. Moreover, in all the drawings, the same constituent elements are given the same reference numerals, and descriptions thereof will not be repeated.

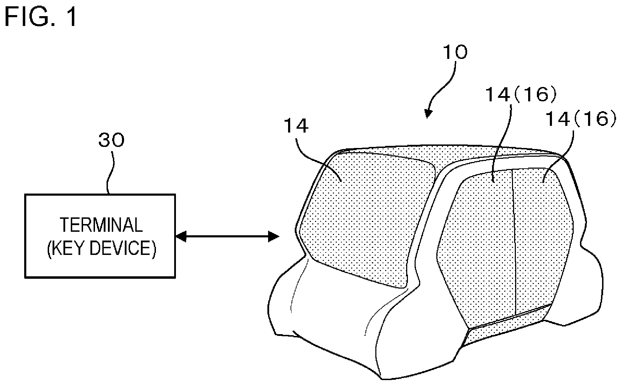

FIG. 1 is a diagram showing a configuration of a system according to an embodiment. This system includes a vehicle 10 and a terminal 30. There may be a case where the vehicle 10 is shared by a plurality of persons (car sharing) or the vehicle 10 is supplied to a car rental. The terminal 30 is a portable terminal possessed by a person using the vehicle 10 and is a device necessary to operate the vehicle 10 (key device) . The terminal 30 stores information necessary to operate the vehicle 10. The terminal 30 is a general-purpose device such as, for example, a smartphone. However, the terminal 30 may be a dedicated device for using the vehicle 10.

The vehicle 10 is autonomous driving-compatible. The level of driving automation of the vehicle 10 is, for example, equal to or greater than Level 3. In addition, in a place where the vehicle 10 is rented, a plurality of vehicles 10 are placed.

The vehicle 10 includes doors 16 and windows 14. The doors 16 are provided for a person to get in and out of the vehicle 10, and for example, are double wing sliding doors. The doors 16 are provided on both side surfaces of the vehicle 10. A greater part of the door 16 serves as the window 14. Further, the window 14 is provided on the front and rear sides of the vehicle 10. Each window 14 is formed using a light-transmitting material such as a resin or glass, thereby having light-transmitting properties with respect to visible light.

The vehicle 10 includes a control device 12. Other than controlling movement of the vehicle 10, the control device 12 controls light emission of a later-described light-emitting panel 100. In addition, the control device 12 acquires, from the light-emitting panel 100 having a touch panel function, information inputted to the light-emitting panel 100. Further, the control device 12 stores information to distinguish the vehicle 10 from another vehicle 10 (vehicle distinguishing information).

Each function configuration unit of the control device 12 may be implemented by hardware (for example: a hard-wired electronic circuit or the like) implementing each function configuration unit, or may be implemented by a combination of hardware and software (for example: a combination of an electronic circuit and a program controlling the electronic circuit or the like). Each function configuration unit of the terminal 30 is the same as that of the control device 12. Below, a case where each function configuration unit of the control device 12 and each function configuration unit of the terminal 30 are implemented by the combination of hardware and software will be described by referring to the control device 12 as an example.

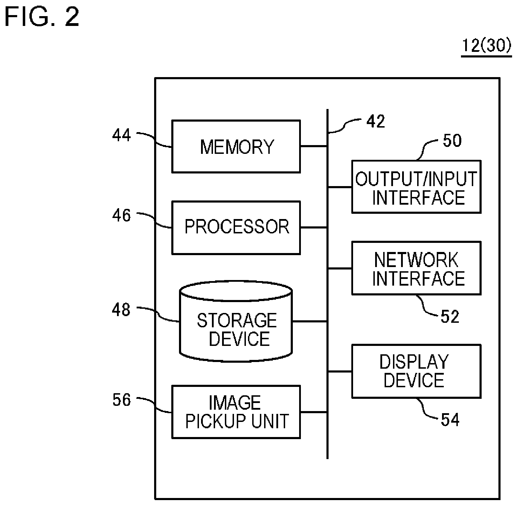

FIG. 2 is a diagram exemplifying a hardware configuration of the control device 12. The control device 12 includes a bus 42, a memory 44, a processor 46, a storage device 48, an input/output interface 50, a network interface 52, a display device 54, and an image pickup unit 56.

The bus 42 is a data transmission channel for the processor 46, the memory 44, the storage device 48, the input/output interface 50, the network interface 52, the display device 54, and the image pickup unit 56 to reciprocally send and receive data. However, a method to connect the processor 46 and the like to each other is not limited to a bus connection.

The processor 46 is an arithmetic processing unit implemented by using a microprocessor or the like. The memory 44 is a main storage device implemented by using Random Access Memory (RAM) or the like. The storage device 48 is an auxiliary storage device implemented by using Read Only Memory (ROM) or a flash memory.

The input/output interface 50 is an interface to connect the control device 12 to a peripheral device. For example, a GPS module for receiving a GPS signal from a satellite and generating GPS information, an inertia measuring device for generating information indicating angular velocity and acceleration of a vehicle, or the like are connected to the input/output interface 50. Meanwhile, the inertia measuring device can generate information indicating angular velocity and acceleration of a vehicle by using, for example, a gyro sensor. In addition, an input device which receives an input operation from a user (occupant), a display device, a touch panel integrated with the input device and the display device, or the like may be additionally connected to the input/output interface 50. Meanwhile, an example of the display device will be shown in the later-described light-emitting panel 100.

In addition, a sensor to detect a moving object in the surroundings of the vehicle 10 is connected to the input/output interface 50. This sensor is an infrared sensor or an image sensor and is installed on the vehicle 10. Other vehicles (including another vehicle 10) and pedestrians are included in the moving objects detected by this sensor.

The network interface 52 is an interface to connect the control device 12 to a communication network. This communication network is, for example, Wide Area Network (WAN). A method for connecting the network interface 52 to a communication network may be a wireless or a wired connection. For example, the control device 12 can communicate with an outside device (for example, a server device or the like) through the network interface 52.

The storage device 48 stores a program module to implement each function configuration unit of the control device 12. The processor 46 implements a function of the control device 12 by reading out this program module to the memory 44 and executing the program module. The storage device 48 may additionally store map information. In this case, this map information may be sent from an outside server through the input/output interface 50. Further, the control device 12 may acquire the map information from the outside server through the input/output interface 50 at a necessary timing. In addition, the control device 12 may repeatedly acquire traffic information from the outside server through the input/output interface 50. The map information and the traffic information are used when the control device 12 allows the vehicle 10 to travel.

The display device 54 is, for example, a touch panel. The processor 46 allows the display device 54 to display information necessary to the user. In addition, the processor 46 recognizes a touch operation to the display device 54 as operational information by the user. Further, the processor 46 may allow the display device 54 to perform a dramatic color display.

Meanwhile, the terminal 30 may additionally include a light-emitting device. This light-emitting device is located, for example, in the surroundings of the display device 54 and includes a configuration which is the same as the later-mentioned light-emitting panel 100. In this case, the processor 46 of the terminal 30 performs presentation using light, using at least this light-emitting device.

The image pickup unit 56 generates an image. The control device 12 detects a sight line of the user riding the vehicle 10 by processing the image generated by the image pickup unit 56. Meanwhile, the control device 12 may detect the sight line of the user using another method.

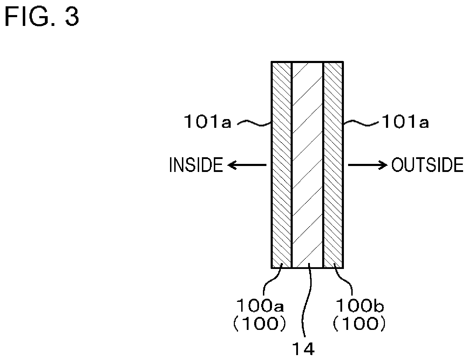

FIG. 3 is a cross-sectional view of the window 14. As described above, the window 14 has light-transmitting properties. In addition, a plurality of light-emitting panels 100 are installed on both of the outside surface and the inside surface of the window 14. Light emission of these plurality of light-emitting panels 100 is independently controlled. Below, the light-emitting panel 100 on the inside surface of the window 14 may be described as a light-emitting panel 100a, and the light-emitting panel 100 on the outside surface of the window 14 may be described as a light-emitting panel 100b. The light-emitting panel 100 has light-transmitting properties. In addition, the light-emitting panel 100 emits light mainly to one surface (hereunder described as a light-emitting surface 101a) side. With the strength of light emitted to the light-emitting surface 101a side as a reference, the strength of light emitted to the opposite side of the light-emitting surface 101a is equal to or less than 10%, preferably equal to or less than 5%, and further preferably equal to or less than 2%. The light-emitting panel 100 may be a lighting device, or a display device.

The light-emitting surface 101a of the light-emitting panel 100a faces the inner side of the vehicle 10. Thereby, the light-emitting panel 100a emits light mainly toward an occupant of the vehicle 10. The light-emitting panel 100a emits light to, for example, decorate the inner surface of the vehicle 10 or to provide information to a user (occupant) of the vehicle 10. However, since light from the light-emitting panel 100a hardly leaks to the exterior of the vehicle 10, the what light emission is being performed by the light-emitting panel 100a cannot be checked from the exterior of the vehicle 10. Therefore, privacy of the user is secured.

Meanwhile, the light-emitting surface 101a of the light-emitting panel 100b faces the exterior of the vehicle 10. Thereby, the light-emitting panel 100b emits light mainly toward the exterior of the vehicle 10. In addition, when the light-emitting panel 100b emits light, it becomes difficult to visually recognize the interior of the vehicle 10 from the exterior of the vehicle 10. Therefore, privacy of the user is secured. Moreover, since light from the light-emitting panel 100b hardly leaks to the interior of the vehicle 10, the interior of the vehicle 10 is hardly affected even when the light-emitting panel 100b emits light. Therefore, even when the light-emitting panel 100b is emitting light, the user in the vehicle 10 can visually recognize the exterior of the vehicle 10.

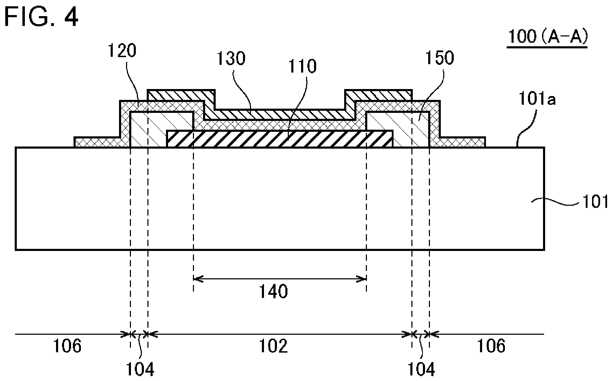

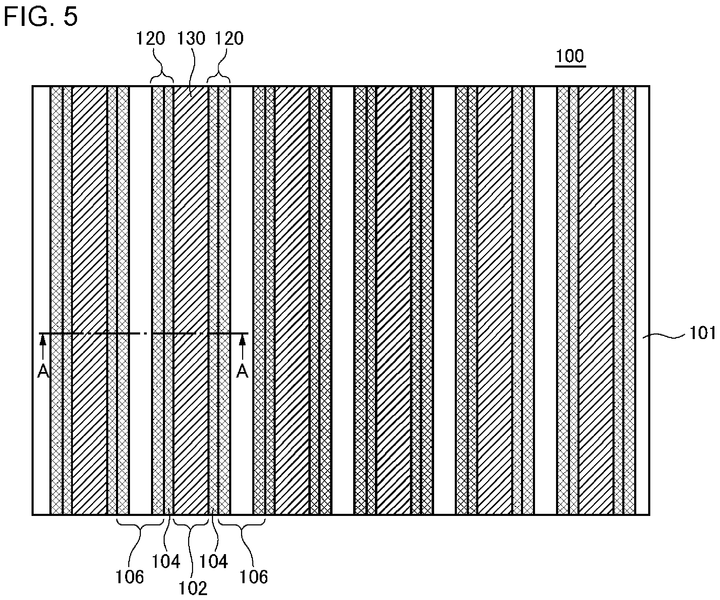

FIG. 4 is a cross-sectional view of a configuration of the light-emitting panel 100. FIG. 5 is a plan view of the light-emitting panel 100. FIG. 4 corresponds to a cross section taken along line A-A of FIG. 5. The light-emitting panel 100 includes a substrate 101, a plurality of light-emitting units 140, and an insulating film 150. A light-transmitting material is used for the substrate 101. The plurality of light-emitting units 140 are separated from each other, each including a first electrode 110, an organic layer 120, and a second electrode 130. The first electrode 110 is a light-transmitting electrode, and the second electrode 130 is an electrode having light shielding properties, with at least a portion thereof overlapping the first electrode 110. The organic layer 120 is located between the first electrode 110 and the second electrode 130. The insulating film 150 covers an edge of the first electrode 110. In addition, at least a portion of the insulating film 150 is not covered by the second electrode 130.

Further, when viewed from a direction perpendicular to the substrate 101, the light-emitting panel 100 includes a first region 102, a second region 104, and a third region 106. The first region 102 is a region overlapped with the second electrode 130. That is, when viewed from the direction perpendicular to the substrate 101, the first region 102 is a region covered with the second electrode 130. Since the second electrode 130 has light shielding properties, the first region 102 does not transmit light. The second region 104 is a region out of a region between the plurality of light-emitting units 140 including the insulating film 150. The third region 106 is a region out of the region between the plurality of light-emitting units 140 not including the insulating film 150. In addition, the width of the second region 104 is narrower than that of the third region 106. As details will be described later, both of the second region 104 and the third region 106 transmit light. The light-emitting panel 100 has light-transmitting properties since it includes the second region 104 and the third region 106.

The substrate 101 has light-transmitting properties and is, for example, a glass substrate or a resin substrate. The substrate 101 may have flexibility. In a case where the substrate 101 has flexibility, the thickness of the substrate 101 is, for example, equal to or greater than 10 µm and equal to or less than 1,000 µm. The substrate 101 is polygonal, for example, rectangular, or circular. Moreover, in a case where the substrate 101 is a resin substrate, the substrate 101 is formed using, for example, polyethylene naphthalate (PEN), polyether sulphone (PES), polyethylene terephthalate (PET), or polyimide. In a case where the substrate 101 is a resin substrate, an inorganic barrier film of SiNₓ, SiON or the like is preferably formed on at least one surface (preferably, on both surfaces) of the substrate 101 in order to prevent moisture from permeating the substrate 101.

A light-emitting unit 140 is formed on a surface of the light-emitting surface 101a side of the substrate 101. The light-emitting unit 140 has a configuration in which the first electrode 110, the organic layer 120, and the second electrode 130 are laminated in this order. In a case where the light-emitting panel 100 is a lighting device, the plurality of light-emitting units 140 extends linearly. On the other hand, in a case where the light-emitting panel 100 is a display device, the plurality of light-emitting units 140 may be disposed so as to constitute a matrix, or to constitute a segment or to display a predetermined shape (for example, to display an icon). In addition, the plurality of light-emitting units 140 are formed according to pixels.

The first electrode 110 is a transparent electrode having light-transmitting properties. A material of the transparent electrode contains a metal, for example, a metal oxide formed of an indium tin oxide (ITO), an indium zinc oxide (IZO), an indium tungsten zinc oxide (IWZO), a zinc oxide (ZnO), or the like. The thickness of the first electrode 110 is, for example, equal to or greater than 10 nm and equal to or less than 500 nm. The first electrode 110 is formed by, for example, sputtering or vapor deposition. Meanwhile, the first electrode 110 may be a conductive organic material such as carbon nanotubes, PEDOT/PSS, or the like. In the present drawing, a plurality of linear first electrodes 110 are formed in parallel to each other on the substrate 101. Therefore, the first electrode 110 is not located in the second region 104 and the third region 106.

The organic layer 120 includes a light-emitting layer. The organic layer 120 includes, for example, a configuration in which a hole injection layer, the light-emitting layer, and an electron injection layer are laminated in this order. A hole transport layer may be formed between the hole injection layer and the light-emitting layer. In addition, an electron transport layer may be formed between the light-emitting layer and the electron injection layer. The organic layer 120 may be formed by vapor deposition. In addition, at least one layer of the organic layer 120, for example, a layer which is in contact with the first electrode 110, may be formed using a coating method such as ink jetting, printing, or spraying. Meanwhile, in this case, the remaining layers of the organic layer 120 may be formed by vapor deposition. In addition, all layers of the organic layer 120 may be formed using a coating method.

The second electrode 130 includes a metal layer composed of a metal selected from a first group including, for example, Al, Au, Ag, Pt, Mg, Sn, Zn, and In, or an alloy of metals selected from the first group. In this case, the second electrode 130 has light shielding properties. The thickness of the second electrode 130 is, for example, equal to or greater than 10 nm and equal to or less than 500 nm. However, the second electrode 130 may be formed using a material exemplified as a material of the first electrode 110. The second electrode 130 is formed by, for example, sputtering or vapor deposition. In the example shown in the drawing, the light-emitting panel 100 includes a plurality of linear second electrodes 130. Each second electrode 130 is provided per each of the first electrodes 110, the width thereof being wider than that of the first electrode 110. Therefore, when viewed from a direction perpendicular to the substrate 101, the entirety of the first electrode 110 is overlapped and covered by the second electrode 130 in the width direction. In addition, the width of the first electrode 110 may be wider than that of the second electrode 130, and when viewed in the direction perpendicular to the substrate 101, the entirety of the second electrode 130 may be covered by the first electrode 110 in the width direction.

An edge of the first electrode 110 is covered by the insulating film 150. The insulating film 150 is formed of, for example, a photosensitive resin material such as polyimide and surrounds a portion of the first electrode 110 serving as the light emitting unit 140. An edge of the second electrode 130 in the width direction is located over the insulating film 150. In other words, when viewed from the direction perpendicular to the substrate 101, a portion of the insulating film 150 protrudes from the second electrode 130. In addition, in the example shown in the drawing, the organic layer 120 is formed over and on the side of the insulating film 150. However, the organic layer 120 is divided in a region between the light-emitting units 140 next to each other.

As described above, the light-emitting panel 100 includes a first region 102, a second region 104, and a third region 106. The first region 102 overlaps the second electrode 130. The second region 104 includes the insulating film 150 out of a region between the plurality of light-emitting units 140. In the example illustrated in the present drawing, the organic layer 120 is also formed in the second region 104. The third region 106 is a region not including the insulating film 150 out of the region between the plurality of light-emitting units 140. In the example shown in the drawing, no organic layer 120 is formed in at least a portion of the third region 106.

In addition, in the example shown in FIG. 5, each of the first region 102, the second region 104, and the third region 106 linearly extends in the same direction as each other. In addition, the second region 104, the first region 102, the second region 104, and the third region 106 are repeatedly aligned in this order.

Since the first region 102 includes the light-emitting unit 140, light is emitted on the light-emitting surface 101a side. Meanwhile, since the first region 102 includes the second electrode 130, light emission from the light-emitting unit 140 hardly leaks to the opposite side of the light-emitting surface 101a.

In addition, a region between the first regions 102 adjacent to each other is the second region 104 and the third region 106. Since both of the second region 104 and the third region 106 do not include a material having light shielding properties, the second region 104 and the third region 106 are regions which transmit visible light. In other words, the light-emitting panel 100 includes the second region 104 and the third region 106 repeatedly, thereby having light-transmitting properties.

Meanwhile, in a case where the light-emitting panel 100 includes a plurality of kinds of light-emitting units 140 which have colors different from each other and these plurality of kinds of light-emitting units 140 are independently controllable of each other, the light-emitting unit 140 becomes color-tunable. For example, in a case where the light-emitting panel 100 includes a red light-emitting unit 140, a blue light-emitting unit 140, and a green light-emitting unit 140, the light-emitting panel 100 becomes substantially full-color-tunable.

Next, a usage of the vehicle 10 will be described.

First, a user using the vehicle 10 stores key information necessary to operate the vehicle 10 in the terminal 30 in advance. This key information includes vehicle distinguishing information of the vehicle 10 to be used by the user. In addition, this key information may include scheduled usage start time and scheduled usage end time of the vehicle 10. Further, route specification information to specify a route on which the vehicle 10 is to travel is stored in the terminal 30. The route specification information is information which directly shows a route, and is used together with map information. However, there is also a case where the information which directly shows a route is stored in a server. In such a case, the route specification information is information (ID) which specifies information that directly shows the route.

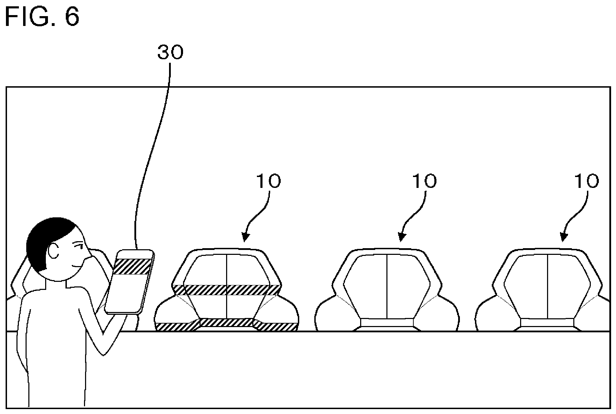

Then, the user operates the terminal 30 when getting close to a place where the vehicle 10 is standing by. By this operation, as shown in FIG. 6, the terminal 30 and the vehicle 10 which is planned to be used by the user emit light interlockingly with each other. The interlocking operation here includes blinking at the same timing, switching emission colors at the same timing, and the terminal 30 and the vehicle 10 emitting light with a predetermined time difference so that light emission from the terminal 30 switches to the vehicle 10, or the like, but it is not limited to these.

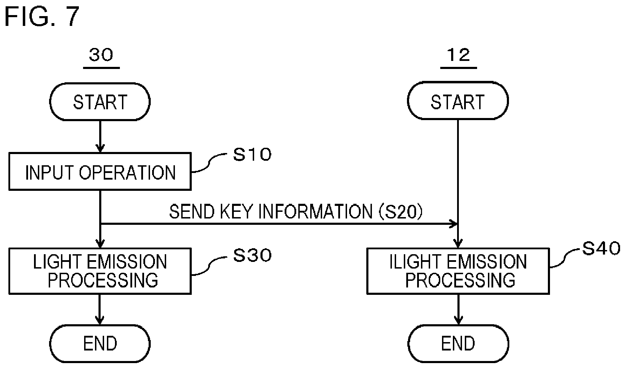

FIG. 7 shows examples of flowcharts in a case where the vehicle 10 and the terminal 30 perform a light emission operation shown in FIG. 6. First, the user of the terminal 30 performs predetermined input with respect to the terminal 30 (S10) . Then, the terminal 30 sends key information (predetermined information) via radio (S20). Other than the above-mentioned vehicle distinguishing information, the key information includes light emission pattern information which indicates a light emission pattern to be performed by the vehicle 10. Then, the display device 54 (or light-emitting device) of the terminal 30 starts emitting light according to the light emission pattern information sent by the terminal 30 (S30).

In a case where the vehicle distinguishing information sent from the terminal 30 to the vehicle 10 corresponds to the vehicle distinguishing information stored in the vehicle 10, the control device 12 starts light emission of at least some of a plurality of light-emitting panels 100b according to the light emission pattern information received from the terminal 30 (S40). Here, the time from S20 to S40 is short. Therefore, the processing shown in S30 and that shown in S40 start at approximately the same timing. In other words, the light emission of the terminal 30 and light emission of the light-emitting panel 100b are interlocked. Therefore, the user of the terminal 30 can easily recognize the vehicle 10 to be used by his/herself even when a plurality of vehicles 10 are emitting light.

Meanwhile, in the example shown in FIG. 7, the terminal 30 sends information which indicates the light emission pattern to the vehicle 10. However, after receiving the key information, the vehicle 10 may send information which indicates the light emission pattern to the terminal 30.

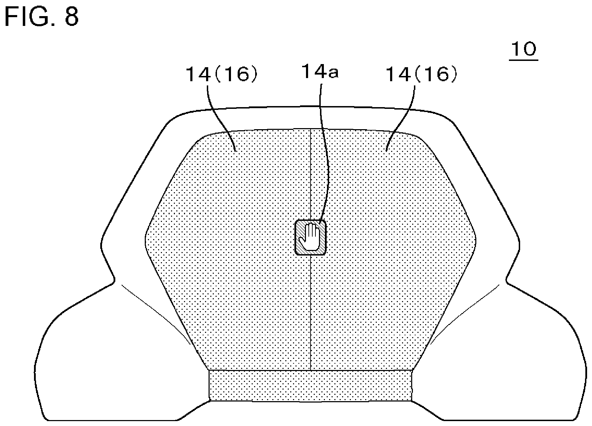

Next, the user approaches the vehicle 10 to be used. The door of the vehicle 10 opens by fingerprint authentication. The vehicle 10 obtains the fingerprint of the user who is to use the vehicle 10 next from the server in advance. In addition, a reading device for fingerprint authentication is provided to a portion of the window 14 of the door 16. As shown in FIG. 8, the control device 12 of the vehicle 10 allows a region 14a to emit light out of the light-emitting panel 100b which overlaps the reading device for fingerprint authentication. Meanwhile, an outside server sends information indicating the fingerprint of the user to the control device 12 before the usage of the vehicle 10 begins. Meanwhile, the authentication method used here may be an authentication method other than fingerprint authentication. Exemplary biometric authentication that can be used to authenticate a user are, other than fingerprint authentication, for example, vein authentication, palm print authentication, and the like.

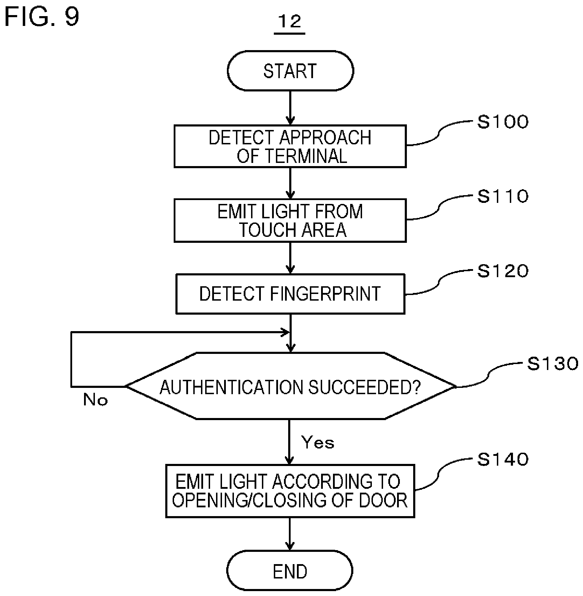

FIG. 9 shows an example of a flowchart when the control When the control device 12 detects a terminal 30 has approached (S100), it allows the region 14a out of the plurality of light-emitting panels 100b which overlaps the reading device for fingerprint authentication to emit light (S110) . This detection is performed, for example, by the terminal 30 repeatedly sending information via radio and the control device 12 of the vehicle 10 detecting the information via the network interface 52.

When the user touches the device for fingerprint authentication, the device reads the user's fingerprint (S120). Then, the control device 12 opens the door 16 in a case where the read fingerprint matches a fingerprint obtained in advance (S130 : Yes). At this time, at least some of the plurality of light-emitting panels 100b installed on the window 14 of the door 16 emit light (S140).

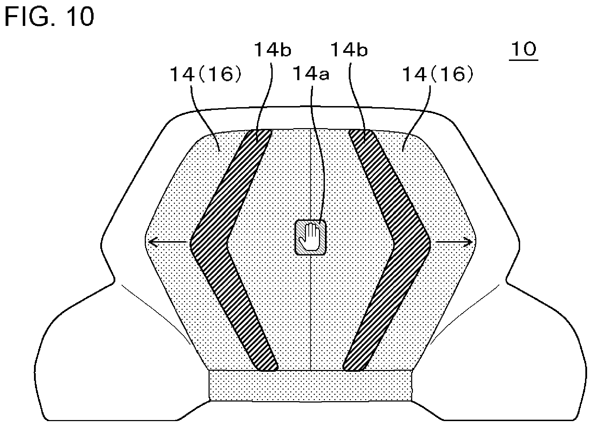

FIG. 10 is a diagram showing an example of the light emission pattern shown in S140 of FIG. 9. In the example shown in the drawing, the control device 12 allows the light-emitting panels 100b installed on the window 14 of the door 16 to partially emit light. Then, the control device 12 sequentially switches the light-emitting panels 100b emitting light, and moves the light-emitting portion out of a light-emitting area in the moving direction of the door 16 (pattern 14b). The control device 12 repeatedly performs this light emission until the door 16 is completely opened. Meanwhile, the control device 12 may start this light emission immediately before the door 16 is opened or after the door 16 starts opening. In addition, in S140, the control device 12 may continuously allow the region 14a of the plurality of light-emitting panels 100 to emit light, or may gradually weaken and end the light emission of the region 14a.

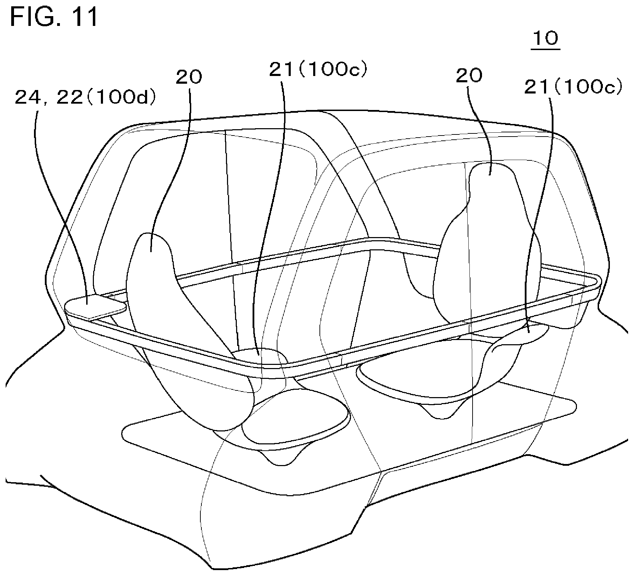

FIG. 11 is a diagram showing a state of the interior of the vehicle 10. A plurality of seats 20 are installed on the interior of the vehicle 10. At least one of the seats 20 is changeable in at least one of a position thereof and an orientation thereof. In other words, the seats may be arranged in the interior of the vehicle 10.

For example, in FIG. 11, two seats 20 are arranged facing each other. Either of these seats 20 is movable in the traveling direction. In addition, the orientation of either of the seats 20 is changeable. For example, the seat 20 in the front side may be oriented in the traveling direction, and the seat 20 in the rear side may be oriented in a direction opposite to the traveling direction.

In addition, there may be a case where the plurality of seats 20 (for example, two seats 20) are arranged side by side in the interior of the vehicle 10. In this case, various seat arrangements are possible when the plurality of seats 20 are movable in the front-rear direction and the seats 20 are rotatable.

For example, the plurality of seats 20 aligned side-by-side may be oriented in the same direction. In a case where both of the plurality of seats 20 are oriented to the front and arranged in the rear side, a plurality of users are able to enjoy the view ahead of the vehicle 10 and in addition, it is possible to secure enough space around the users' feet. In addition, in a case where both of the plurality of seats 20 are oriented to the rear and arranged in the front side, the plurality of users are able to enjoy the view in the rear of the vehicle 10 and in addition, it is possible to secure enough space around the users' feet.

Moreover, at least one seat 20 may be oriented in the opposite direction of another seat 20.

In addition, a case where two seats 20 are arranged in the interior of the vehicle 10 is assumed. In this case, when one seat 20 is oriented to the front and arranged in the rear side, and the other seat 20 is oriented to the rear and arranged in the front side, two users can be seated facing each other, and in addition, it is possible to secure enough space around the user's feet.

Meanwhile, the number of seats 20 and the seat arrangements are not limited to the examples described above.

The seat 20 includes an armrest 21. On the surface of the armrest 21, a light-emitting panel 100 having a touch panel function (hereinafter referred to as a light-emitting panel 100c) is provided. Since the light-emitting panel 100c has flexibility, even when the armrest 21 has a curved surface, the light-emitting panel 100c can be deformed along the curved surface. On the light-emitting panel 100c, a button and an icon to control light emission of the light-emitting panels 100a and a button and an icon to perform seat arrangements are displayed. Therefore, the user can change the light emission of the light-emitting panels 100a to a desirable decoration by operating the light-emitting panel 100c. In addition, the user can change the seat arrangements by operating the light-emitting panel 100c.

Meanwhile, the user may register in advance information indicating a light emission pattern of the light-emitting panels 100a for decoration, and information indicating a desirable seat arrangement in the outside server or the terminal 30. In this case, the control device 12 reads these pieces of information from the outside server or the terminal 30, controls the light emission of the light-emitting panel 100a, and performs seat arrangements by using the read information.

Moreover, a stand 22 (placing portion) is provided in the vicinity of any of the seats 20. The stand 22 is provided for placing the terminal 30 thereon and has a built-in antenna 24. For example, in a case where the upper surface of the stand 22 is concaved, the antenna 24 is provided on the bottom surface of the concaved portion. The antenna 24 communicates with the terminal 30 via radio. The communication standard used here is, for example, a short-range radio communication such as Near field radio communication (NFC) or the like. In addition, a light-emitting panel 100 (a light-emitting panel 100d below) is provided on the stand 22. Since the light-emitting panel 100d has flexibility, even when the stand 22 has a curved surface, the light-emitting panel 100d can be deformed along the curved surface.

In addition, a contactless feeding device, for example, a wireless feeding device may be provided in the stand 22. In this case, when a user places the terminal 30 on the stand 22, the terminal 30 is charged.

When the door 16 is opened in order to let a user get in the vehicle, the control device 12 allows the light-emitting panel 100d to emit light to notify the user of the location of the stand 22.

When the terminal 30 is placed on the stand 22, the control device 12 reads information stored in the terminal 30, for example, route specification information, via the antenna 24. At the time of this reading, as details will be described later, the light-emitting panel 100d of the stand 22 and the display device 54 (or light-emitting device) of the terminal 30 emit light interlockingly with each other. The interlocking operation here includes blinking at the same timing, switching emission colors at the same timing, and the terminal 30 and the light-emitting panel 100d emitting light with a predetermined time difference so that light emission from the terminal 30 switches to the light-emitting panel 100c, or the like, but is not limited thereto.

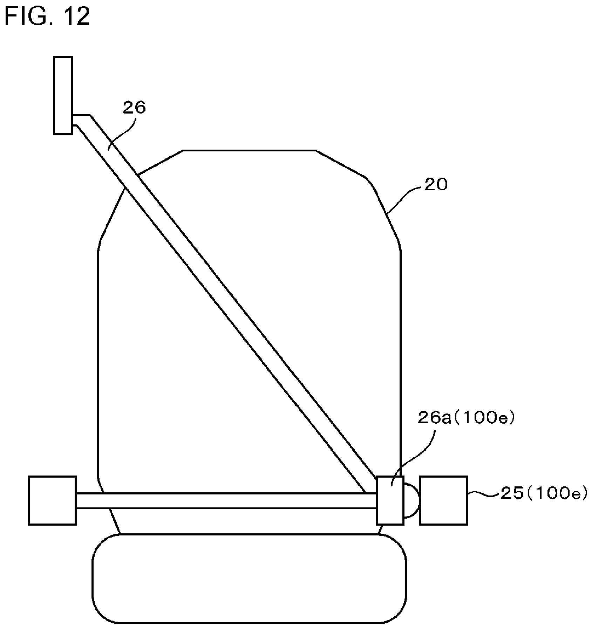

FIG. 12 is a diagram showing a configuration of the seat 20. The seat 20 is provided with a seat belt 26. A light-emitting panel 100e is provided on a tongue plate 26a and a buckle 25 of the seat belt 26. The control device 12 starts light emission of a light-emitting panel 100e after opening the door 16 of the vehicle 10. The control device 12 continues this light emission until the user is seated in the seat 20 and the tongue plate 26a is inserted into the buckle 25. Meanwhile, that the tongue plate 26a has been inserted into the buckle 25 is detected by, for example, a sensor provided to the buckle 25. The result detected by the sensor is sent to the control device 12.

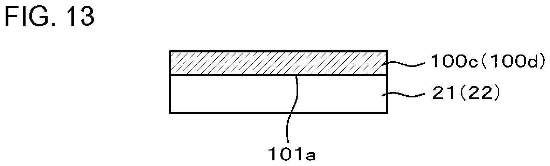

FIG. 13 is a cross-sectional view to explain the orientation of the light-emitting panel 100c. In the example shown in the drawing, the light-emitting surface 101a of the light-emitting panel 100c is oriented to the surface of the armrest 21. When such a configuration is adopted, light emitted from the light-emitting panel 100c is reflected on the surface of the armrest 21 and emitted to the outside of the light-emitting panel 100c. Therefore, a pattern of the surface of the armrest 21 is more emphasized.

Meanwhile, the light-emitting surface 101a of the light-emitting panel 100c may be oriented to the opposite side of the armrest 21. In addition, the light-emitting surface 101a of the light-emitting panel 100d may be oriented to the surface of the stand 22, or to the opposite side of the surface of the stand 22.

At least one of the armrest 21 and the stand 22 is formed of a material such as wood, carbon, a metal (aluminum), or the like. When the armrest 21 is configured by wood, the user can obtain a wooden texture from the armrest 21 and the stand 22 by light from the exterior of the vehicle 10 or the like in the daytime. On the other hand, since the brightness in the interior of the vehicle decreases in the nighttime, it becomes difficult to obtain the wooden texture. With respect to the above, in the present embodiment, the light-emitting panel 100c is disposed on the surface of the armrest 21, and the light-emitting panel 100d is disposed on the surface of the stand 22. Therefore, when the light-emitting panels 100c and 100d appropriately emit light in the nighttime, the above-mentioned wooden texture can be obtained even in the nighttime. At this time, the control device 12 controls light emission luminescence of the light-emitting panels 100c and 100d to a degree at which the wooden material can be visually recognized. A detailed description will be provided below with the light-emitting panel 100c as an example.

When the light-emitting surface 101a of the light-emitting panel 100c is oriented to the armrest 21 side, an effect described below can be obtained. First, the texture of the armrest 21 can be obtained during non-light emission of the light-emitting panel 100c. Meanwhile, when the light-emitting panel 100c is emitting light, the pattern of the material of the armrest 21 is emphasized according to the light emission luminescence or the light emission color of the light-emitting panels 100c and 100d, and an impression is given that is different from the texture (the texture of the material itself) during non-light emission. In other words, by controlling the light emission of the light-emitting panel 100c, the interior design of the vehicle 10 can be changed.

On the other hand, when the light-emitting surface 101a of the light-emitting panel 100c is configured to be oriented opposite to the armrest 21 side, the texture of the armrest 21 can be obtained during non-light emission of the light-emitting panel 100c. Meanwhile, when light emission of the light-emitting panel 100c is controlled to a degree at which the material of the armrest 21 can be visually recognized, the texture of the armrest 21 can be obtained even when the interior of the vehicle 10 is relatively dark (for example, night). In addition, when increasing the light emission luminescence of the light-emitting panel 100c to, for example, the maximum, and the material of the armrest 21 is made invisible, the light-emitting panel 100c can be used as illumination, and the interior of the vehicle 10 can be a design which makes good use of the light-emitting panel 100c.

In addition, since the light-emitting panel 100c has flexibility, even when the armrest 21 has a curved surface, the light-emitting panel 100c can be deformed along the curved surface. This is also the case with the light-emitting panel 100d. Therefore, it is possible to use the light-emitting panel 100 to be used in configuring the interior for a vehicle which has a high degree of freedom.

Further, switching on/off light emission, the light emission luminescence, and the light emission color of the light-emitting panels 100c and 100d can be freely controlled by the user's manual operation. By performing control by a later-described touch panel provided on the light-emitting panel 100, the operation of the control becomes easier to understand intuitively.

Here, light emission control of the light-emitting panels 100c and 100d can be automatically performed by the control device 12. The control device 12 may, for example, estimate the illuminance of the interior and the exterior of a vehicle based on date and time information to prevent the light-emitting panel 100c from emitting light in the daytime and to allow automatic light emission to start at dusk. In addition, the control device 12 may increase the light emission luminescence of the light-emitting panel in the night time. Meanwhile, the control device 12 may control the light-emitting panels 100c and 100d using the detection result from an illuminance sensor in the interior of the vehicle 10 instead of the date and time information.

Meanwhile, the light-emitting panel 100 may be installed on a portion other than the armrest 21 and the stand 22 out of the interior of the vehicle 10. In this case also, the above-mentioned configuration may be included.

As described above, the combination of, for example, materials which configure the interior of the vehicle 10 such as the armrest 21 and the stand 22 and the light-emitting panel 100 can be used as a new configuration of interior designs for a vehicle such as an automobile.

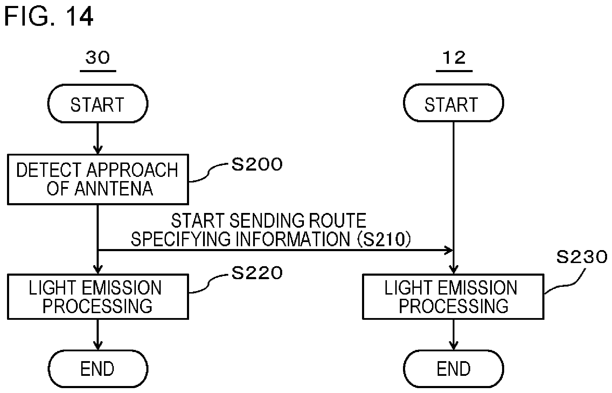

FIG. 14 shows a first example of flowcharts at the time when the control device 12 reads route specifying information from the terminal 30. In the example shown in the drawing, the antenna 24 of the stand 22 repeatedly sends a signal. When receiving the signal sent by the antenna 24, the terminal 30 determines that the antenna 24 is approaching (S200) and sends route specifying information (S210). Then, the display device 54 (or light-emitting device) of the terminal 30 starts light emission according to information on a predetermined light emission pattern (S220).

Moreover, when receiving the route specifying information via the antenna 24, the control device 12 allows at least some of the light-emitting panels 100c to start emitting light according to the information on the predetermined light emission pattern (S230). Here, by synchronizing the light emission pattern predetermined with respect to the control device 12 with the light emission pattern predetermined with respect to the terminal 30, it is possible to interlockingly operate the light emission of the terminal 30 with the light emission of light-emitting panel 100c. For example, the timing at which the light-emitting panel 100c emits light is determined to be slightly delayed from the timing at which the terminal 30 emits light. Therefore, the user of the terminal 30 can recognize that the control device 12 has read the route specifying information from the terminal 30.

Then, after finishing reading the necessary information, the control device 12 ends the light emission of the light-emitting panel 100d and sends information indicating that the reading has finished to the terminal 30 via the antenna 24. The terminal 30 ends the light emission of the display device 54 (or light-emitting unit).

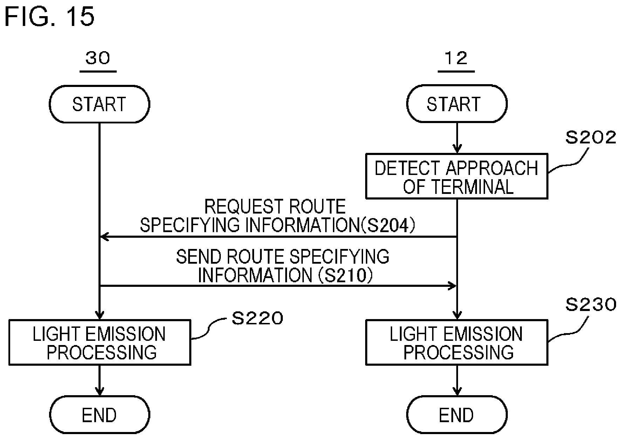

FIG. 15 shows a second example of flowcharts at the time when the control device 12 reads route specifying information from the terminal 30. In the example shown in the drawing, the terminal 30 repeatedly sends a signal. When receiving the signal sent by the terminal 30 via the antenna 24, the control device 12 determines that the terminal 30 is approaching (S202) and emits a signal requesting route specifying information to the terminal 30 (S204) . Details of processing thereafter (including S210 and S220) are as shown in FIG. 14.

Thereafter, the control device 12 sets a route to be traveled by the vehicle 10 using the route specifying information and the map information which have been read. Then, the control device 12 starts the vehicle 10. At this time, the control device 12 starts light emission of the plurality of light-emitting panels 100b installed on the window 14 at the timing at which the vehicle 10 starts moving. Thereby, as described above, it becomes difficult to visually recognize the interior of the vehicle 10 from the exterior of the vehicle 10. The light emission of the light-emitting panel 100b is continued until, for example, the vehicle 10 stops for the user to get out. Meanwhile, the control device 12 need not allow some of the light-emitting panels 100b to emit light when unnecessary.

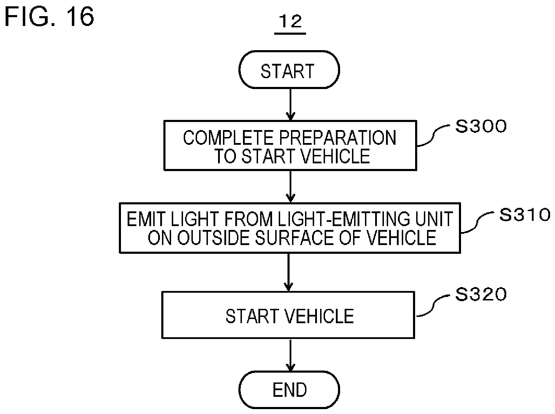

FIG. 16 shows an example of a flowchart when the control device 12 starts the light emission of the light-emitting panel 100b of the window 14 at the timing at which the vehicle 10 starts moving.

First, the control device 12 detects that preparation to start the vehicle 10 has been completed (S300) . This detection is made when the control device 12 detects that the user is sitting on the seat 20, when the control device 12 detects that the user has gotten in the vehicle 10 and the door 16 has been closed, or when the control device 12 detects the terminal 30 via the antenna 24. Sitting of the user on the seat 20 may be detected by, for example, insertion of the tongue plate 26a into the buckle 25, or by an infrared sensor or a pressure sensor provided in the seat 20.

Then, the control device 12 starts the light emission of the light-emitting panel 100b of the window 14 (S310) . After that, the control device 12 starts the vehicle 10 (S320).

Meanwhile, in the example shown in FIG. 16, the control device 12 starts the light emission of the light-emitting panel 100b immediately before the vehicle 10 starts moving. However, the control device 12 may also start the light emission of the light-emitting panel 100b immediately after the vehicle 10 starts moving.

After that, the control device 12 allows the vehicle 10 to travel along the route set in advance. During control of the travel, the control device 12 uses, for example, map information, GPS information, and traffic information. The map information includes positional information such as that of a building or a scenic place and the traffic information includes positional information of a place where an accident has occurred or the like. Therefore, the control device 12 can grasp the direction in which a user can see an object that should be seen by the user existing outside the vehicle 10 by using the map information, the traffic information, and the GPS information of the vehicle 10. Here, as the object, for example, a place where an accident has occurred, a building, a scenic place, or the like may be listed. Then, the control device 12 determines the light emission pattern of the plurality of light-emitting panels 100a to guide the sight line of the user in the direction of the above-mentioned object by using the current sight line of the user and the direction in which the object can be seen. Meanwhile, the control device 12 specifies the user's sight line by, for example, processing an image of the user generated by the image pickup unit 56.

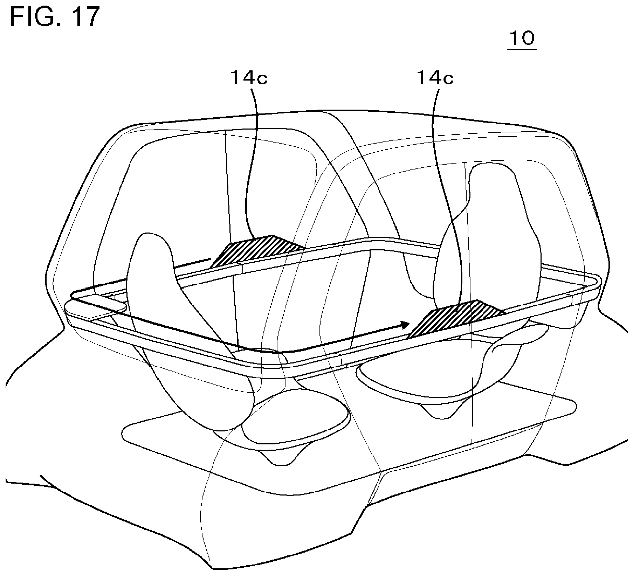

FIG. 17 shows an example of a light emission pattern of the light-emitting panels 100a when a sight line guidance is performed. The plurality of light-emitting panels 100a are installed on the inner surfaces of the windows 14. Some of the plurality of light-emitting panels 100a are disposed aligned along the side surface of the vehicle 10. Further, first, the control device 12 determines the light-emitting panel 100a which is located in front of the sightline of the user or in the vicinity thereof as a starting point of light emission. Next, the control device 12 determines the light-emitting panel 100a which is located in the direction in which an object can be seen or in the vicinity thereof as an end point of light emission. Then, the control device 12 first allows the light-emitting panel 100a as the starting point to emit light, and then allows the light-emitting panels 100a located between the starting point and the end point to emit light in order from the nearest one to the starting point (pattern 14c) . Then, at last, the control device 12 allows the light-emitting panel 100a as the end point to emit light. The control device 12 allows the plurality of light-emitting panels 100a to repeatedly perform such light emission. In other words, the control device 12 sequentially allows the plurality of light-emitting panels 100a to emit light so that the sight line overlaps the object when the user follows the light-emitting panels 100a emitting light with the eyes. Thereby, the control device 12 can appropriately guide the sight line of the user.

Meanwhile, in a case where a plurality of users are riding the vehicle 10, the control device 12 may perform control of the light-emitting panels 100a for the above-mentioned sight line guidance for each of the plurality of users.

In addition, in a case where the object is a scenic place, there is a case where the scenic place cannot be seen from the user riding the vehicle 10 depending on the weather. Therefore, the control device 12 may determine the light emission pattern of the light-emitting panel 100a which serves as the end point, by using weather information in the surroundings of the vehicle 10 or the surroundings of the object. For example, in a case where the weather information in the surroundings of the vehicle 10 or the surroundings of the object indicates fog or rain, the control device 12 allows the light-emitting panel 100a as the end point to emit light in a different pattern from a case where weather information indicates clear skies. Blinking or the like is an example of the different pattern. In addition, in a case where the light-emitting panel 100a as the end point is a display, the control device 12 may allow the display to show detailed information of the object. The information shown here is included in, for example, the map information.

In addition, the control device 12 may change the light emission mode of the light-emitting panel 100a as the end point as the vehicle approaches the object. A change in the mode of light emission is a change of in emission color or a countdown display up to a location where the object becomes visually recognizable, or the like.

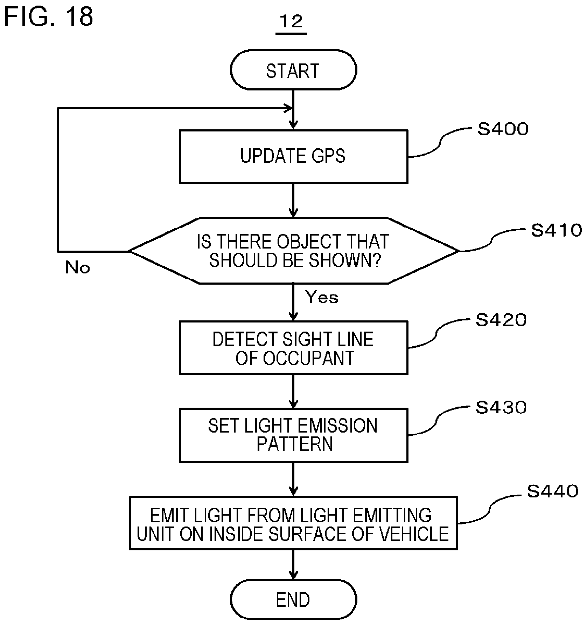

FIG. 18 is a flowchart showing an example of control performed by the control device 12 when sight line guidance is performed. First, while the vehicle 10 is traveling, GPS information keeps being updated (S400). Then the control device 12 determines whether there is an object which should be shown to the user or not within a predetermined range from the current location of the vehicle 10 by using the map information or the traffic information (S410). In a case where there is an object which should be shown to the user (S410: Yes), the control device 12 detects the sight line of the user (S420) . Then the control device 12 sets a light emission pattern of the plurality of light-emitting panels 100a by using the direction of the object which should be shown to the user and the sight line of the user (S430) and allows the plurality of light-emitting panel 100a to emit light in the set light emission pattern (S440).

After that, the control device 12 stops the vehicle 10 when the vehicle 10 arrives at the place where the user therein to get off. Then, the control device 12 opens the door 16 to let the user get off, however, before that, determines whether there is a moving object, for example, another vehicle (including a vehicle which does not perform autonomous driving) approaching the vehicle 10 or not. Then, in a case where another vehicle is approaching, the control device 12 makes at least some of the plurality of light-emitting panels 100a to display a warning. As the warning display, the control device 12 determines the light-emitting pattern for the plurality of light-emitting panels 100a using the approaching direction of another vehicle. Therefore, the user can grasp the approaching direction of another vehicle by seeing the light emission pattern of the light-emitting panel 100a.

For example, the control device 12 allows at least some of the plurality of light-emitting panels 100a to emit light in a first light emission pattern in a case where a moving object such as another vehicle, a bicycle, a motorcycle, a pedestrian, or the like is approaching the vehicle 10 from a first direction (for example, a direction of overtaking the vehicle 10 controlled by the control device 12). In addition, the control device 12 allows at least a portion of the plurality of light-emitting panels 100a to emit light in a second light emission pattern in a case where another vehicle is approaching the vehicle 10 from a second direction (for example, a direction of passing the vehicle 10 controlled by the control device 12, namely, the opposite direction to the first direction). Here, the first pattern is, for example, a pattern in which the plurality of light-emitting panels 100a sequentially emit light in a direction along the first direction. In addition, the second light emission pattern is, for example, a pattern in which the plurality of light-emitting panels 100a sequentially emit light in a direction along the second direction.

The above-mentioned warning display may be a warning using colors. The control device 12 displays a warning in, for example, a warm color such as red or the like in a case where another moving object is approaching the vehicle 10. In addition, the above-mentioned warning display may be a warning by icon display. The control device 12 displays a warning display icon in a case where, for example, a moving object is approaching.

Meanwhile, in a case where the control device 12 can detect that the user is trying to get out of the vehicle 10, the detection may be a condition for starting the above-mentioned warning processing. The control device 12 may detect that the user is trying to get out of the vehicle 10 by, for example, processing an image of the image pickup unit 56. In addition, the control device 12 may detect that the user is trying to get out of the vehicle 10 by using output of a proximity sensor installed near the door 16 or on the door 16.

In addition, in a case where the user of the vehicle 10 gets out from the door 16 on a side opposite to the side considered to be passed by another vehicle, the control device 12 need not perform the above-mentioned warning display. For example, the control device 12 need not perform the above-mentioned warning display in a case where the vehicle 10 is stopped at a road shoulder and the door 16 on the side of the road shoulder is opened.

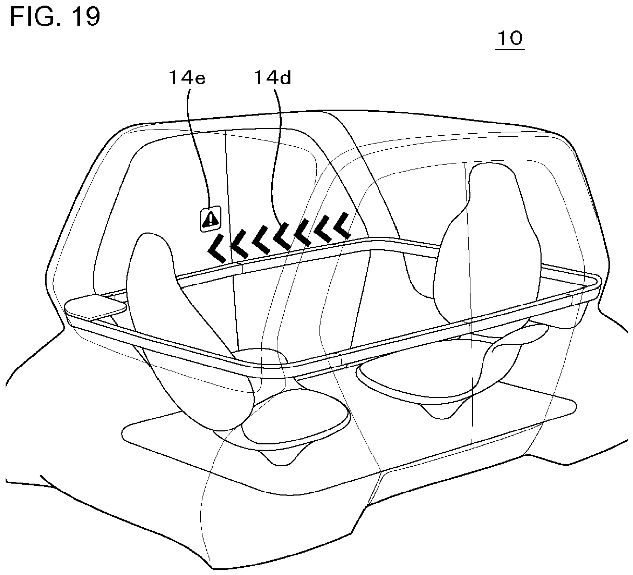

FIG. 19 is a diagram showing an example of the warning display by the light-emitting panels 100a. In the example shown in the drawing, the control device 12 allows the plurality of light-emitting panels 100a to sequentially emit light in a direction corresponding to the approaching direction of a vehicle approaching the vehicle 10 (pattern 14d). Here, in a case where the light-emitting panel 100a is a display, the control device 12 allows the light-emitting panel 100a to display a pattern which shows the approaching direction of another vehicle. In addition, the light-emitting panels 100a displays a warning mark 14e on the display.

Meanwhile, the user's field of vision is fixed to a certain degree according to the arrangement and the orientation of the seat 20. As described above, at least one of the arrangement and the orientation of the seat 20 is changeable. Then, the control device 12 may determine the light-emitting panel 100a to emit light first when displaying a pattern 14d using at least one of the arrangement and the orientation of the seat 20. For example, a region easily viewable by the user seated in the seat 20 is in front of the seat 20. However, depending on the orientation or the position of the seat 20, the light-emitting panel 100a located in front of the seat 20 varies. Thus, the control device 12 allows any of the light-emitting panels 100a located in front of the seat 20 to emit light first.

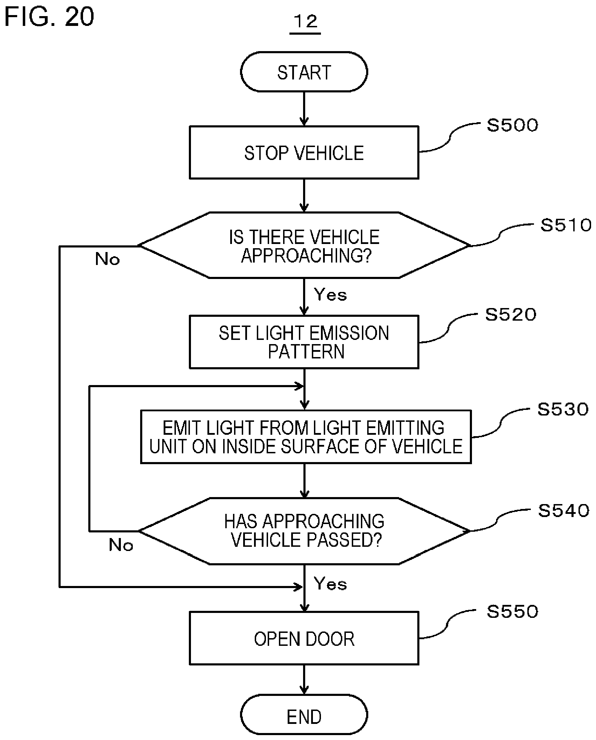

FIG. 20 is an example of a flowchart when the control device 12 allows the light-emitting panels 100a to display a warning. First, the control device 12 stops the vehicle 10 (S500) . Then, the control device 12 determines whether there is another vehicle approaching the vehicle 10 or not using a sensor of the vehicle 10 (S510) . In a case where there is no other vehicle approaching the vehicle 10 (S510: No), the control device 12 opens the door 16 (S550).

In a case where there is another vehicle approaching the vehicle 10 (S510: Yes), the control device 12 determines the approaching direction of the other vehicle to the vehicle 10, and determines a light emission pattern using this direction (S520) . Then, the control device 12 allows the plurality of light-emitting panels 100a to emit light using the determined light emission pattern (S530). The control device 12 repeatedly performs the light emission of the light-emitting panel 100a until the other vehicle passes the vehicle 10 (S540: No). When the other vehicle has passed the vehicle 10 (S540: Yes), the control device 12 opens the door 16 (S550).

Meanwhile, when opening the door 16, the control device 12 may allow the light-emitting panels 100a to emit light in a different pattern from the warning display in order to notify the user that the door 16 is opening. In addition, when opening the door 16, the control device 12 ends the light emission of the light-emitting panel 100b. Immediately before the end of the light emission, the control device 12 may change the light emission pattern of the light-emitting panels 100b. In this way, it becomes possible to allow a person around the vehicle 10 to recognize that a person is getting out of the vehicle. Meanwhile, change in the light emission pattern includes change in the light emission color, blinking, or the like.

In addition, the above-mentioned warning is displayed when the door 16 is being opened while the vehicle 10 is stationary. However, the warning may also be displayed when the vehicle 10 is moving. In such a case, it is possible to allow the user to recognize that a moving object is approaching the vehicle 10 and the approaching direction of the moving object in advance.

Meanwhile, the above-mentioned embodiment also discloses the contents below.
1. A light-emitting system including:
   a light-emitting device provided in a vehicle; and
   a terminal held by a user of the vehicle,
   in which the vehicle includes a communication unit which communicates with the terminal,
   in which the terminal includes a first light-emitting unit, and
   in which the light-emitting device and the first light-emitting unit emit light interlockingly with each other when the terminal sends predetermined information to the communication unit.
2. The light-emitting system according to 1,
   in which one of the terminal and the communication unit sends pattern information indicating a light emission pattern to the other, and
   in which the terminal and the light-emitting device emit light according to the pattern information.
3. A light-emitting system provided to a vehicle,
   the vehicle including:
      a placing portion on which a key device storing key information to move the vehicle is placed; and
      a communication unit which communicates with the key device on the placing portion,
   in which the key device includes a first light-emitting unit,
   the light-emitting system including:
      a second light-emitting unit located in the placing portion; and
      a control unit controlling the second light-emitting unit,
      in which the control unit allows the second light-emitting unit to emit light interlockingly with light emission of the first light-emitting unit at a timing at which the communication unit reads the key information from the key device.
4. A vehicle provided with the light-emitting system according to any one of 1 to 3.

As described above, although the embodiments and examples of the present invention have been set forth with reference to the accompanying drawings, they are merely illustrative of the present invention, and various configurations other than those stated above can be adopted.

This application claims priority from Japanese Patent Application No. 2017-205518, filed October 24, 2017, the disclosure of which is incorporated by reference in its entirety.

## Claims

1. A light-emitting device comprising:
a plurality of light-emitting units installed on a vehicle and emitting light toward an interior of the vehicle; and
a control unit controlling the plurality of light-emitting units independently from each other,
wherein in a case where a moving object is approaching the vehicle, the control unit determines a light-emitting pattern of the plurality of light-emitting units using an approaching direction of the moving object.

2. The light-emitting device according to claim 1,
wherein the control unit
allows at least one of the plurality of light-emitting units to emit light in a first light emission pattern in a case where the moving object is approaching the vehicle from a first direction, and
allows at least one of the plurality of light-emitting units to emit light in a second light emission pattern in a case where the moving object is approaching the vehicle from a second direction.

3. The light-emitting device according to claim 2,
wherein at least some of the plurality of light-emitting units are disposed aligned along a side surface of the vehicle,
wherein the first direction is opposite to the second direction,
wherein the first light emission pattern is a pattern in which the plurality of light-emitting units sequentially emit light in a direction along the first direction, and
wherein the second light emission pattern is a pattern in which the plurality of light-emitting units sequentially emit light in a direction along the second direction.

4. The light-emitting device according to claim 3,
wherein a side surface of the vehicle has light-transmitting properties, and
wherein at least some of the plurality of light-emitting units have light-transmitting properties.

5. The light-emitting device according to any one of claims 1 to 4,
wherein a seat is arranged in the interior of the vehicle,
wherein at least one of an arrangement and an orientation of the seat is changeable, and
wherein the control unit determines the light-emitting unit to emit light first out of the plurality of light-emitting units using at least the one of the arrangement and the orientation.

6. A vehicle provided with the light-emitting device according to any one of claims 1 to 5.

7. A method for controlling light emission, comprising:
providing a vehicle with a plurality of light-emitting units emitting light toward an interior of the vehicle, and
determining, by a computer, when a moving object is approaching the vehicle, a light-emitting pattern of the plurality of light-emitting units using an approaching direction of the moving object.

8. A program for causing a computer to function as a device that controls light emission of a plurality of light-emitting units,
the plurality of light-emitting units being installed on a vehicle and emitting light toward an interior of the vehicle, and
the program causing the computer to function to determine, when a moving object is approaching the vehicle, a light-emitting pattern of the plurality of light-emitting units using an approaching direction of the moving object.
